# EUROPÄISCHE PATENTSCHRIFT

(11) **EP 1 384 273 B1**
(45) Veröffentlichungstag und Bekanntmachung des Hinweises auf die Patenterteilung: **30.05.2012**
(21) Anmeldenummer: 02729875.1
(22) Anmeldetag: 18.04.2002
(51) Int. Cl.: H01L 41/09, F02M 51/06

(54) **VORRICHTUNG ZUM ÜBERTRAGEN EINER AUSLENKUNG EINES AKTORS**
DEVICE FOR TRANSMITTING AN EXCURSION OF AN ACTUATOR
DISPOSITIF POUR TRANSMETTRE UNE DEVIATION D'UN ACTIONNEUR

(30) Priorität: 20.04.2001 WO PCT/DE01/01521
(43) Veröffentlichungstag der Anmeldung: 28.01.2004
(73) Patentinhaber: Continental Automotive GmbH, 30165 Hannover (DE); VOLKSWAGEN AG, 38436 Wolfsburg (DE)
(72) Erfinder: KRONBERGER, Maximilian, 93053 Regensburg (DE); FRANK, Wilhelm, 96049 Bambeg (DE); KOMISCHKE, Thomas, 12355 Berlin (DE); SCHMIDT, Harald, A-1100 Wien (AT)
(74) Vertreter: Patentanwaltskanzlei WILHELM & BECK
(86) Internationale Anmeldenummer: PCT/DE2002/001443
(87) Internationale Veröffentlichungsnummer: WO 2002/086983

(56) Entgegenhaltungen:
- EP-A- 0 065 784
- WO-A-99/17014
- DE-A- 3 530 729
- DE-A- 19 902 260
- DE-A- 19 911 047
- US-A- 4 695 034
- PATENT ABSTRACTS OF JAPAN vol. 013, no. 081 (E-719), 23. Februar 1989 (1989-02-23) & JP 63 262065 A (NIPPON DENSO CO LTD), 28. Oktober 1988 (1988-10-28) -& JP 63 262065 A (NIPPON DENSO CO LTD) 28. Oktober 1988 (1988-10-28)
- PATENT ABSTRACTS OF JAPAN vol. 013, no. 023 (E-705), 19. Januar 1989 (1989-01-19) & JP 63 226083 A (SUMITOMO SPECIAL METALS CO LTD), 20. September 1988 (1988-09-20) -& JP 63 226083 A (SUMITOMO SPECIAL METALS CO LTD) 20. September 1988 (1988-09-20)

## Beschreibung

Die Erfindung betrifft eine Vorrichtung zum übertragen einer Auslenkung eines Aktors und ein Verfahren zu seiner Herstellung gemäß den unabhängigen Ansprüchen.

Aktoren, die auf dem piezoelektrischen Prinzip beruhen, sind zur hochpräzisen und sehr schnellen Steuerung von Stellvorgängen geeignet, wie sie beispielsweise zur Ansteuerung von Einspritzvorrichtungen bzw. Ventilen von Brennkraftmaschinen zweckmäßig sind. Um größere lineare Auslenkungen der Piezoaktoren zu realisieren, müssen diese aus einer Vielzahl von aufeinander gestapelten einzelnen Piezoelementen bestehen. Dies hat den Nachteil, dass die Baugröße für manche Einsatzzwecke unzulässige Dimensionen annimmt. So ist beispielsweise der Einbauraum für Einspritzventile im Zylinderkopf einer Brennkraftmaschine derart begrenzt, dass für Piezoaktoren in der für die gewünschten Stellbewegungen notwendigen Längendimension in aller Regel kein Platz ist. Aus diesem Grund werden kleinere Piezoaktoren verwendet, deren lineare Auslenkungen mittels geeigneten Hebeleinrichtungen in größere Auslenkungen eines Stellglieds übersetzt werden.

Aus der US,4,101,076 ist ein Einspritzventil bekannt, das einen piezoelektrischen Aktor aufweist, der über ein mechanisches übertragungselement direkt eine Einspritznadel ansteuert. Das Übertragungselement weist zwei unterschiedlich lange Hebelarme auf, die im rechten Winkel zueinander angeordnet sind und in einem Auflagebereich miteinander verbunden sind. Der kürzere Hebelarm ist dem piezoelektrischen Aktor und der längere Hebelarm der Einspritznadel zugeordnet. Das Übertragungselement liegt im Auflagebereich am Gehäuse des Einspritzventils auf. Die Auslenkung des piezoelektrischen Aktors wird durch die unterschiedlichen Längen der zwei Hebelarme in eine größere Auslenkung der Einspritznadel umgesetzt.

Allerdings bietet die Form des Übertragungselements eine nur mäßige Steifigkeit, die insbesondere bei hochdynamischen Schaltungsvorgängen zu einer Ungenauigkeit der Übertragung der Auslenkungen führt.

Weiterhin ist aus der WO 99/17014 ein Einspritzventil bekannt, bei dem zur Übertragung und Übersetzung einer Auslenkung eines Piezoaktors auf ein Stellglied mechanische Übertragungselemente vorgesehen sind, die im wesentlichen die Form eines Zylinders aufweisen, dessen Begrenzungsflächen im wesentlichen dreieckförmig ausgebildet sind, wobei die Ecken abgerundet sind. Durch die Breite der Übertragungselemente werden flächige Auflagebereiche gebildet, so dass eine Reibung bei der Übertragung reduziert ist.

Das Ziel der vorliegenden Erfindung besteht darin, eine Vorrichtung zum Übertragen einer Auslenkung eines Aktors zur Verfügung zu stellen, die bei einfachem und Platz sparendem Aufbau eine möglichst reibungsarme Übertragung und Übersetzung der Aktorauslenkungen auf ein Stellglied ermöglicht.

Dieses Ziel wird mit dem Gegenstand der unabhängigen Ansprüche erreicht. Merkmale vorteilhafter Weiterbildungen der Erfindung ergeben sich aus den abhängigen Ansprüchen.

Erfindungsgemäß weist die Vorrichtung zum Übertragen einer Auslenkung eines Aktors wenigstens ein Übertragungselement auf, das einen ersten, einen zweiten und einen dritten Auflagebereich **aufweist,** wobei der erste Auflagebereich einem Gegenlager, der zweite Auflagebereich dem Aktor und der dritte Auflagebereich einem Stellglied zugeordnet ist. Es ist vorgesehen, dass sich das wenigstens eine Übertragungselement beim Einwirken des Aktors mit dem ersten Auflagebereich gegen das Gegenlager abstützt und durch eine Drehbewegung um einen Drehpunkt mit dem dritten Auflagebereich das Stellglied bewegt, wobei das wenigstens eine Übertragungselement im wesentlichen in Form einer Platte ausgebildet ist, die im wesentlichen senkrecht zur Stellbewegung angeordnet ist, und wobei der erste, der zweite und der dritte Auflagebereich jeweils als im wesentlichen gerade Flächen auf der Platte ausgebildet sind.

Die erfindungsgemäße Vorrichtung hat insbesondere den Vorteil einer Minimierung der Relativbewegungen zwischen den Übertragungselementen, so dass eine direkte Übertragung der Auslenkungen des Aktors mit geringem Verschleiß und Verlustarbeit gewährleistet ist.

Bei der erfindunsgemäβen Ausfürungsform der Erfindung sind wenigstens zwei Übertragungselemente gegenüber liegend angeordnet, was den Vorteil einer symmetrischen Verteilung der Stellkräfte sowohl am Aktor wie auch am Stellglied hat. Zudem halbieren sich bei zwei Übertragungselementen die Stellkräfte, die auf jedes dieser Übertragungselemente einwirken, ebenso wie die wirksamen Flächenpressungen an den jeweiligen Auflagebereichen.

Bei einer weiteren Ausführungsform der Erfindung sind wenigstens drei Übertragungselemente vorgesehen, die im wesentlichen konzentrisch zueinander angeordnet sind. Damit ist der Vorteil verbunden, dass sich die Stellkräfte und damit die Flächenpressungen an den jeweiligen Auflagebereichen weiter reduzieren lassen. Zudem können bei drei oder mehr Übertragungselementen diese relativ kompakt ausgeführt sein, da sie insgesamt weniger Kräfte übertragen müssen.

Eine erfindungsgemäße Ausführungsform sieht konzentrische Mittelachsen des Aktors und des Stellglieds vor, was den Vorteil einer sehr kompakten Bauform der gesamten Vorrichtung hat. Ein Kraftstoffinjektor mit der erfindungsgemäßen Stellvorrichtung kann auf diese Weise relativ schlank ausgeführt sein und ist damit auch für den Einbau in sehr beengten räumlichen Verhältnissen, bspw. im Zylinderkopf einer Brennkraftmaschine, geeignet.

Eine weitere erfindungsgemäße Ausführungsform sieht vor, dass die Platte des wenigstens einen Übertragungselements stufenförmig ausgebildet ist. Diese erfindungsgemäße Ausführungsform hat den Vorteil einer ideal kompakten Bauausführung, da damit der Abstand zwischen Aktor und Stellglied sehr klein gewählt werden kann.

Gemäß einer erfindungsgemäßen Ausführungsform ist der zweite Auflagebereich einer Oberseite und der dritte Auflagebereich einer Unterseite eines ersten geraden Abschnitts der stufenförmigen Platte zugeordnet, was den besonderen Vorteil eines sehr kompakten Übertragungselements hat.

Bei einer erfindungsgemäßen Ausführungsform ist vorgesehen, dass der zweite gerade Abschnitt der stufenförmigen Platte einen unteren Mantelbereich des Aktors teilweise umgreift, womit ebenfalls der Vorteil einer sehr kompakten Bauform des Übertragungselements verbunden ist.

Gemäß einer Ausführungsform der Erfindung ist die Platte durch Kalt- oder Warmverformung hergestellt. Dies hat den besonderen Vorteil eines günstigen Faserverlaufs in der Platte und damit einer sehr hohen Zähigkeit gegen plastische Verformung unter den auftretenden Betriebsbelastungen.

Gemäß einer weiteren Ausführungsform der Erfindung sind geschliffene Oberflächen der Auflagebereiche der Platte vorgesehen, womit der Vorteil verbunden einer minimierten Reibung zwischen den sich berührenden Flächen der Auflagebereiche verbunden ist.

Die erfindungsgemäße Ausführungsform sieht vor, dass zwischen dem Aktor und dem zweiten Auflagebereich des wenigstens einen Übertragungselemente ein mit dem Aktor verbundenes Zwischenglied vorgesehen ist. Dies Ausführungsform hat den Vorteil eines gut an die räumlichen Gegebenheiten anpassbaren Zwischenglieds, das somit insgesamt zu einer kompakten Bauform der erfindungsgemäßen Vorrichtung beiträgt.

Eine erfindungsgemäße Ausführungsform ist gekennzeichnet durch eine form-, kraft- oder stoffschlüssige Verbindung zwischen Aktor und Zwischenglied, was den Vorteil hat, dass keinerlei weitere Verbindungselemente notwendig sind. Dies führt zu einem geringen Gewicht und zu einer kompakten Bauweise.

Die erfindungsgemäße Ausführungsform ist gekennzeichnet durch eine Linienberührung zwischen der erhabenen Kante des Zwischenglieds und dem zweiten Auflagebereich der Platte, womit der Vorteil einer guten Verteilung der auftretenden Kräfte verbunden ist. Eine Linienberührung hat gegenüber einer punktuellen Auflage den Vorteil einer erheblich geringeren Flächenpressung.

Gemäß einer Ausführungsform der Erfindung beträgt die Höhe der erhabenen Kante ungefähr 200 µm. Auf diese Weise kann jederzeit sichergestellt werden, dass eine definierte Auflagelinie auch unter ungünstige Bedingungen verbleibt, die keiner solchen elastischen oder plastischen Verformung unterliegt, dass die definierte Auflagelinie in eine undefinierte Auflagefläche übergeht.

Gemäß der erfindungsgemäßen Ausführungsform der Erfindung ist die erhabene Kante abgerundet, was den Vorteil einer auch bei Winkelbewegungen jederzeit bestehen bleibenden Linienberührung hat.

Eine erfindungsgemäße Ausführungsform ist gekennzeichnet durch geschliffene Oberflächen des Zwischenglieds und/ oder des Abstützelements, was den Vorteil einer minimierten Reibung zwischen den Auflagebereichen hat.

Gemäß einer erfindungsgemäßen Ausführungsform ist der Aktor ein piezoelektrischer Aktor, womit die Vorteile von sehr schnellen Längsbewegungen bei relativ großen zu übertragenden Kräften und sehr kompakten räumlichen Abmessungen verbunden sind.

Eine weitere Ausführungsform der Erfindung sieht ein Übersetzungsverhältnis in einem Bereich von ungefähr 1:4 bis 1:20 zwischen einer Auslenkung des Aktors und einer Auslenkung des Stellglieds vor. Damit ist der Vorteil verbunden, dass mit einem extrem kompakten Aktor relativ große Stellbewegungen ausgeführt werden können.

Eine spezielle Ausführungsform der Erfindung ist gekennzeichnet durch ein Übersetzungsverhältnis von ungefähr 1:6 zwischen den Auslenkungen des Aktors und des Stellglieds, womit der Vorteil verbunden ist, dass auch bei relativ großen zu übertragenden Stellbewegungen noch ausreichend große Kräfte

In einer weiteren Ausführungsform betrifft die erfindung eine Vorrichtung, die zum übertragen einer Auslenkung eines Aktors, insbesondere eines Piezo-Aktors eines Einspritzventils, bei der vorgesehen ist, dass zumindest eine erste Hebeleinrichtung und eine zweite Hebeleinrichtung vorgesehen ist, wobei die Auslenkung des Aktors von der ersten Hebeleinrichtung zur zweiten Hebeleinrichtung übertragen wird. Auf diese Weise werden zwei "in Reihe geschaltete" Hebeleinrichtungen gebildet, wodurch bei extrem kompaktem Aufbau große Hebelverhältnisse und somit große Stellbewegungen erzielt werden. Gegebenenfalls können zwischen dem Aktor und der ersten Hebeleinrichtung und/oder zwischen der ersten Hebeleinrichtung und der zweiten Hebeleinrichtung Zwischenstücke beziehungsweise -elemente vorgesehen sein, wenn dies vorteilhaft ist.

Eine Ausführungsform der Erfindung sieht vor, dass die Auslenkung des Aktors von der zweiten Hebeleinrichtung zu einem Stellglied übertragen wird. Dabei können auch zwischen der zweiten Hebeleinrichtung und dem Stellglied ein oder mehrere Zwischenstücke beziehungsweise -elemente vorgesehen sein, wenn dies vorteilhaft ist.

Auch bei Ausführungsformen mit zumindest zwei Hebeleinrichtungen kann vorgesehen sein, dass die erste Hebeleinrichtung und/oder die zweite Hebeleinrichtung zumindest ein im Wesentlichen senkrecht zur Auslenkungsrichtung des Aktors angeordnetes Übertragungselement aufweist. Dadurch kann in einfacher Weise sichergestellt werden, dass die auf das Stellglied übertragene Kraft parallel zur Auslenkungsrichtung des Aktors verläuft, was in vielen Fällen erwünscht ist.

In diesem Zusammenhang sehen bevorzugte Ausführungsformen der erfindungsgemäßen Vorrichtung vor, dass zumindest ein Übertragungselement im Wesentlichen plattenförmig ist. Ein plattenförmiger Aufbau der Übertragungselemente kann in wirksamer Weise dazu beitragen, den Aufbau der erfindungsgemäßen Vorrichtung kompakt auszuführen.

Bei einer Ausführungsform der erfindungsgemäßen Vorrichtung ist vorgesehen, dass sie ein erstes Übertragungselement mit einem ersten, zweiten und dritten Auflagebereich und ein zweites Übertragungselement mit einem vierten, fünften und sechsten Auflagebereich aufweist, wobei der erste Auflagebereich einem ersten Gegenlager, der zweite Auflagebereich dem Aktor, der dritte Auflagebereich dem zweiten Übertragungselement, der vierte Auflagebereich einem zweiten Gegenlager, der fünfte Auflagebereich dem ersten Übertragungselement und der sechste Auflagebereich einem Stellglied zugeordnet ist. Dabei können gegebenenfalls zwischen den jeweiligen Auflagebereichen und den ihnen zugeordneten Komponenten weitere Elemente vorgesehen sein, wenn dies vorteilhaft ist.

In diesem Zusammenhang ist vorzugsweise weiterhin vorgesehen, dass sich das erste Übertragungselement beim Einwirken des Aktors auf den zweiten Auflagebereich mit dem ersten Auflagebereich gegen das erste Gegenlager abstützt und durch eine Drehbewegung mit dem dritten Auflagebereich auf den fünften Auflagebereich des zweiten Übertragungselements einwirkt, das sich mit dem vierten Auflagebereich an dem zweiten Gegenlager abstützt und durch eine Drehbewegung mit dem sechsten Auflagebereich auf das Stellglied einwirkt. Je nach Ausführungsform können den Drehbewegungen der Übertragungselemente gegebenenfalls Translationsbewegungen überlagert sein.

Eine besonders bevorzugte Weiterbildung der erfindungsgemäßen Vorrichtung sieht vor, dass eine Aktor-Mittelachse und eine Stellglied-Mittelachse durch den zweiten Auflagebereich und den sechsten Auflagebereich verlaufen. Diese Lösung ermöglicht einen besonders kompakten Aufbau der erfindungsgemäßen Vorrichtung.

Bei allen Ausführungsformen der erfindungsgemäßen Vorrichtung kann vorgesehen sein, dass zumindest ein Gegenlager und/oder zumindest ein Übertragungselement im Bereich des ersten beziehungsweise vierten Auflagebereichs zumindest einen abgerundeten Abschnitt aufweist, der hinsichtlich einer Relativbewegung zwischen einem Gehäuse und dem Übertragungselement ein Abrollen ermöglicht. Sofern ein Übertragungselement bezüglich dem Gehäuse auch eine Translationsbewegung ausführt, kann diese der Abrollbewegung gegebenenfalls überlagert sein. Das Abrollen verursacht allgemein weniger Verluste als beispielsweise ein reines Gleiten und ist daher vorteilhaft. Weiterhin wirkt sich ein Abrollen auch positiv auf den Verschleiß aus.

In diesem Zusammenhang kann weiterhin vorgesehen sein, dass zumindest ein abgerundeter Abschnitt durch zumindest ein separates Element gebildet ist. In diesem Fall wird bevorzugt, dass mit dem oder den separaten Elementen in Kontakt gelangende Oberflächen des Gehäuses und/oder des beziehungsweise der Übertragungselemente zumindest teilweise an die Form der separaten Elemente angepasst sind.

Eine vorteilhafte Weiterbildung der Erfindung sieht vor, dass zumindest ein separates Element drehbar in dem Gehäuse gelagert ist.

Zusätzlich oder alternativ kann vorgesehen sein, dass zumindest ein separates Element verschiebbar in dem Gehäuse gelagert ist. In diesem Fall kann das zumindest eine separate Element beispielsweise eine plane Unterseite, mit der es auf einem Gehäuseabschnitt verschiebbar ist, und eine einen halbkreisförmigen Querschnitt aufweisende Oberseite aufweisen, die den abgerundeten Abschnitt bildet und ein Abrollen des Übertragungselements ermöglicht.

Bei einer besonders bevorzugten Ausführungsform der Erfindung ist in diesem Zusammenhang vorgesehen, dass zumindest ein separates Element durch eine Kugel oder eine Walze gebildet ist. Dadurch können beispielsweise Ausführungsformen realisiert werden, bei denen die Übertragungselemente bezüglich dem Gehäuse reine Dreh- beziehungsweise Schwenkbewegungen ausführen. In diesem Fall erfolgt in der Regel eine größere Relativbewegung zwischen dem jeweiligen Übertragungselement und der darauf einwirkenden Komponente, wobei diese Relativbewegung durch Gleiten erfolgen kann.

Die zuvor beschriebene Vorrichtung eignet sich insbesondere für eine Einspritzvorrichtung. Ganz besonders eignet sie sich für eine Einspritzvorrichtung, die nach einem sogenannten Pumpe-Düse-Wirkprinzip arbeitet.

Die Erfindung wird nun anhand von Ausführungsformen mit Bezug auf die beiliegenden Figuren näher erläutert. Es zeigen:
- Figur 1a: eine schematische Prinzipdarstellung eines Wirkzusammenhangs von Aktor, Übertragungselement und Stellglied,
- Figur2: ein schematischer Längsschnitt eines Übertragungselements zwischen Aktor und Stellglied,
- Figur 3a: ein Detailausschnitt der schematischen Prinzipdarstellung entsprchend Figur 1a,
- Figur 4: eine perspektivische Darstellung einer gekröpften Platte des Übertragungselements,
- Figur 5: eine perspektivische Darstellung eines Abstützelements zwischen Platte und Stellglied,
- Figur 6a: eine perspektivische Darstellung eines Zwischengliedes zwischen Aktor und Übertragungselement,
- Figur 6b: eine Draufsicht auf das Zwischenglied entsprechend Figur 6a,
- Figur 7: eine schematische Prinzipdarstellung einer Ausführungsform einer nicht erfindungsgemäßen Vorrichtung, bei der zwei in Reihe geschaltete Hebeleinrichtungen vorgesehen sind,
- Figur 8: eine schematische Prinzipdarstellung einer Ausführungsform der erfindungsgemäßen Vorrichtung, bei der Relativbewegungen zwischen den Übertragungselementen und dem Gehäuse durch Abrollen erfolgen und
- Figur 9: eine schematische Prinzipdarstellung einer Ausführungsform der erfindungsgemäßen Vorrichtung, bei der Relativbewegungen zwischen zwei Übertragungselementen und dem Gehäuse durch eine Kombination von Abrollen und Translation erfolgen.

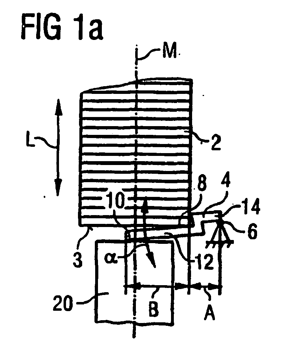

Im folgenden wird ein Ausführungsbeispiel der erfindungsgemäßen Vorrichtung anhand der Figuren 1a bis 6b beschrieben; dabei sind grundsätzlich gleiche Teile mit gleichen Bezugszeichen versehen und werden daher teilweise nicht mehrfach erläutert.

Figur 1a zeigt eine schematische Prinzipdarstellung eines Wirkzusammenhangs von einem Aktor 2, einem Übertragungselement 4 und einem Stellglied 20. Der Aktor 2 kann bspw. ein piezoelektrischer Aktor sein, der aus einer Vielzahl von aufeinander gestapelten Piezoscheiben besteht, wie dies durch die Zeichnung angedeutet ist. Der Aktor 2 kann sich durch Anlegen einer elektrischen Spannung entlang einer Längsrichtung L linear ausdehnen, wobei die Längsrichtung L parallel ist zur Mittelachse M des Aktors 2. Der Aktor 2 wirkt mit seiner unteren Stirnfläche 3 bzw. einem hier nicht eingezeichneten Zwischenglied auf ein Übertragungselement 4 ein, das an einem ersten Auflagebereich 6 randseitig fest abgestützt ist. Der erste Auflagebereich 6 kann bspw. eine feste Gehäusekante oder dergl. sein. Die Berührstelle zwischen Aktor 2 und Übertragungselement 4 wird nachfolgend als zweiter Auflagebereich 8 bezeichnet. Ein dritter Auflagebereich 10 ist eine Berührstelle zwischen dem Übertragungselement 4 und dem Stellglied 20, das bspw. ein Ventilkolben oder dergl. sein kann. Alle drei Auflagebereiche 6, 8, 10 können sowohl als Linienberührung oder als Punktauflagen ausgeführt sein.

Wie anhand der Figur 1a erkennbar ist, sind die Mittelachsen M des Aktors 2 und m des Stellglieds 20 vorzugsweise deckungsgleich, was einen Platz sparenden Einbau der gesamten Vorrichtung ermöglicht. Die erfindungsgemäße Vorrichtung kann bspw. als Ventilstellglied in einem Einspritzventil Verwendung finden, wo in aller Regel nur ein begrenzter Einbauraum im Zylinderkopf einer Brennkraftmaschine zur Verfügung steht. Aus diesem Grund ist eine konzentrische Anordnung von Aktor 2 und Stellglied 20 unter Umständen vorteilhaft wie auch ein möglichst kurzer Aktor 2. Um bei einem ideal kurz bauenden Aktor 2 dennoch ausreichende Stellwege des Stellglieds 20 realisieren zu können, wird mittels des Übertragungselements 4 eine Übersetzung von kurzen Auslenkungen des Aktors 2 auf - je nach gewünschter Übersetzung - längere Auslenkungen des Stellgliedes20 realisiert.

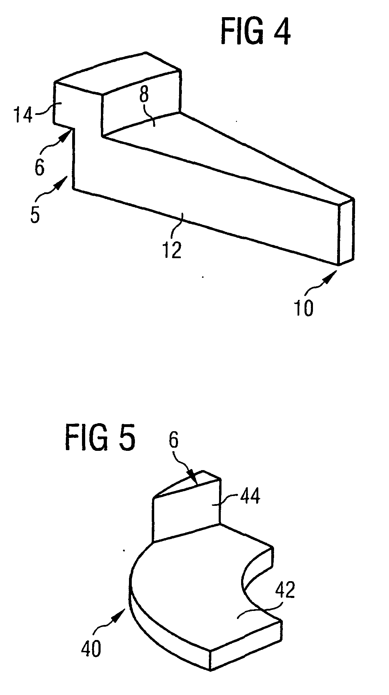

Wie in der schematischen Darstellung zu erkennen, ist ein dem ersten Auflagebereich 6 zugeordneter zweiter gerader Abschnitt 14 des als gekröpfte Platte 5 (vgl. Figur 4) ausgeführten Übertragungselements 4 vorgesehen, der über eine Stufe in einen ersten geraden Abschnitt 12 der Platte 5 mündet. Der Oberseite dieses ersten geraden Abschnitts 12 ist der zweite Auflagebereich 8 und der Unterseite der dritte Auflagebereich 10 zugeordnet. Der Abstand des ersten Hebelarms A zwischen erstem Auflagebereich 6 des Gehäuses und zweitem Auflagebereich 8 des Aktors 2 ist wesentlich kleiner als der Abstand des zweiten Hebelarms B zwischen zweitem Auflagebereich 8 und drittem Auflagebereich 10 des Stellglieds 20. Auf diese Weise entsteht ein Hebelverhältnis von 1:4 bis 1:20, vorzugsweise jedoch von ca. 1:6 bis 1:7.

Ein piezoelektrischer Aktor mit einer typischen Abmessung von 7 x 7 (Querschnittslänge x Querschnittsbreite, jeweils in Millimetern) x 30 (Länge des Aktors 2 in Richtung der Mittelachse M in Millimetern) ist in der Lage, Maximalauslenkungen von ca. 45 µm zu erzielen. Dies entspricht einer Auslenkung des Stellglieds von ca. 270 bis 315 µm je nach gewählter Übersetzung. Bei einer typischen Gesamtlänge der Platte 5 von ca. 10 mm resultiert in diesem Fall ein erster Hebelarm A einer Länge von ca. 1,4 mm und ein zweiter Hebelarm B einer Länge von ca. 8,6 mm.

In einer bevorzugten Ausgestaltung der Erfindung ist nicht nur ein Übertragungselement 4 zwischen Aktor 2 und Stellglied 20 vorgesehen, sondern wenigstens zwei parallel bzw. konzentrisch zueinander angeordnete Übertragungselemente 4. Auf diese Weise werden die Stellkräfte des sich linear ausdehnenden Aktors 2 wesentlich gleichmäßiger auf das Stellglied 20 übertragen, da somit jeweils mindestens zwei Auflagebereiche 6, 8, 10 an jedem der Bauteile 2, 4, 20 vorgesehen sind. Diese Gestaltung dient zugleich einer Verringerung der Flächenpressung an den Auflagebereichen 6, 8, 10 und führt somit zu einem geringeren Verschließ durch Abrieb, was die Lebensdauer der erfindungsgemäßen Vorrichtung erhöht.

Die im Längsschnitt vorzugsweise dreieckförmig ausgebildeten Übertragungselemente 4 mit drittem Auflagebereich 10 in der spitzwinkeligen Dreieckspitze können dabei wahlweise geringfügig verschränkt sein und daher parallel zueinander stehen, wobei die dritten Auflagebereiche 10 jedes Übertragungselements 4, ausgehend von ihren Randbereichen des zweiten geraden Abschnitts 14 jeweils über die Mittelachse M ragen. Bei mehr als zwei Übertragungselementen 4 sind diese vorzugsweise konzentrisch bzw. sternförmig angeordnet, wobei ihre dritten Auflagebereiche 10 nicht über die Mittelachse M ragen.

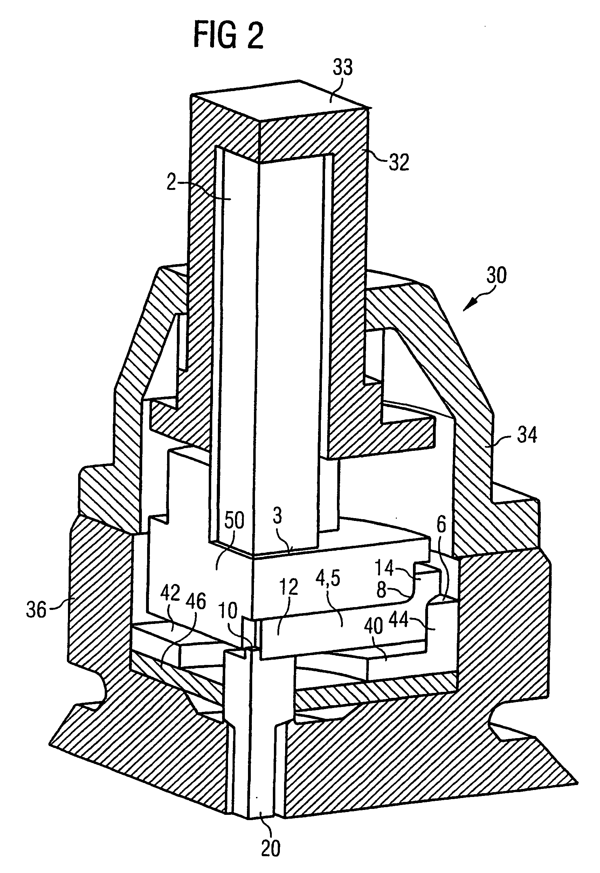

Figur 2 zeigt einen schematischen Längsschnitt eines als gekröpfte Platte 5 ausgeführten Übertragungselements 4 zwischen Aktor 2 und Stellglied 20, die von einem mehrteiligen Gehäuse 30 umschlossen sind. Dabei ist der längliche Aktor 2 von einem ebenfalls länglichen Aktorgehäuse 32 umschlossen, das mit einer oberen Stirnfläche abschließt. Das Aktorgehäuse ist kraft- oder stoffschlüssig mit einem oberen Gehäuseteil 34 verbunden, das wiederum form-, kraft- oder stoffschlüssig mit einem sockelartigen unteren Gehäuseteil 36 verbunden ist. Die Gehäuseteile 32, 34, 36 sind vorzugsweise aus Stahl, da aufgrund der Aktorbewegungen eine gewisse Steifigkeit notwendig ist.

Wie in Figur 2 erkennbar, liegt die gekröpfte Platte 5 mit ihrem ersten Auflagebereich 6 des zweiten geraden Abschnitts 14 auf einer Kante eines Abstützelements 40 (vgl. Figur 5) auf, das eine Grundseite 42 in Kontur eines Viertelkreissegments sowie einen dazu senkrecht stehenden Randabschnitt 44 aufweist. Die Grundseite 42 liegt mit ihrer flachen Unterseite auf einem kreisrunden Scheibenelemente 46, das eine mittige Aussparung zur Durchführung des Stellgliedes 20 aufweist und mit seiner flachen Unterseite seinerseits auf dem unteren Gehäuseteil 36 aufliegt.

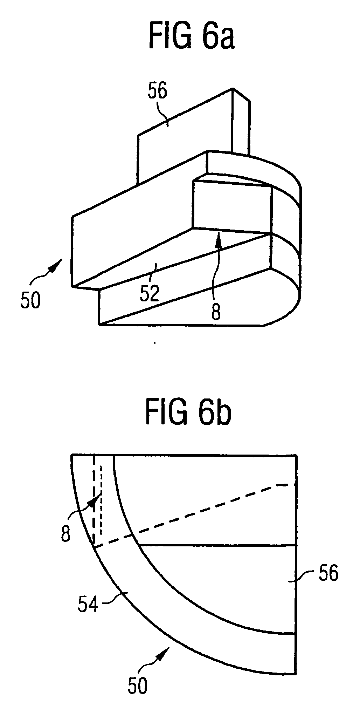

Die untere Stirnfläche 3 des Aktors 2 grenzt an ein Zwischenglied 50 (vgl. Figuren 6a und 6b), das an seiner im wesentlichen flachen Unterseite den zweiten Auflagebereich 8 zur platte 5 aufweist. Das Zwischenglied 50 liegt mit seiner Oberseite formschlüssig an der unteren Stirnfläche 3 des Aktors 2 an und bildet wiederum an seiner Unterseite den zweiten Auflagebereich 8 zum Übertragungselement 4 bzw. die zweiten Auflagebereiche 8 zu den zwei oder mehr Übertragungselementen 4.

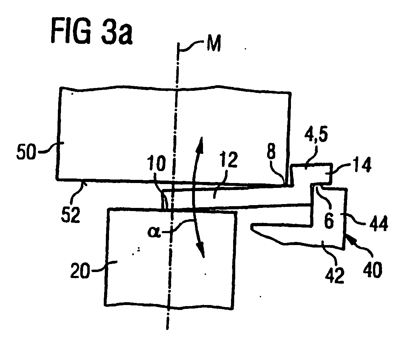

Wie in Figur 3a erkennbar, die einen Detailausschnitt der schematischen Prinzipdarstellung entsprechend Figur 1 zeigt, ist der zweite Auflagebereich 8 und der erste Auflagebereich 6 jeweils als erhabene Kante ausgeführt, die vorzugsweise jeweils eine Höhe von ca. 200 µm über der Unterseite 52 des Zwischenglieds (Auflagebereich 8) bzw. der Oberseite des Randabschnitts 44 (Auflagebereich 6) aufweisen. Diese erhabenen Kanten sind vorzugsweise halbkugelförmig abgerundet und bewirken jeweils eine Linienberührung zur gekröpften Platte 5 an jeweils einer definierten Auflagekante. Bei den im Betrieb auftretenden erheblichen Stellkräften aufgrund des Aktorhubs wird dadurch eine Abplattung der flachen Unterseite 52 des Zwischenglieds 50 bzw. der flachen Oberseite des Randabschnitts 44 des Abstützelements verhindert, die andernfalls einer plastischen Verformung bzw. eines Materialabtrags unterlägen, woraus eine langsame Wanderung der Auflagebereiche 6, 8 und damit eine Verschiebung der effektiven Hebelgelenke resultieren würde.

Die definierte Drehung um einen Winkel a um den annähernd konstanten Drehpunkt des ersten Auflagebereichs 6 ist sowohl aus der Figur 1 wie auch aus der Figur 3 zu entnehmen. Der Auflagebereich 8 unterliegt dabei aufgrund des sehr kurzen ersten Hebelarms A und des relativ kleinen Winkels a einer minimalen Verschiebung. Infolge der Zuordnung der beiden Auflagebereiche 6 und 8 auf einer Ebene entsteht eine minimale Rotationsbewegung in den Berührungspunkten. Der relativ größten Verschiebung unterliegt der dritte Auflagebereich 10 zwischen dem ersten geraden Abschnitt 12 des gekröpften Hebels 5 und der Oberseite des Stellglieds 20.

Figur 4 zeigt eine perspektivische Darstellung der gekröpften Platte 5 des Übertragungselements 4, die im Längsschnitt eine dreieckförmige Kontur aufweist. Der erste gerade Abschnitt 12 mit dem zweiten Hebelarm B geht über eine zwischen zweitem Auflagebereich 8 und erstem Auflagebereich 6 gebildete Stufe in den zweiten geraden Abschnitt 14 über. Die Platte 5 ist vorzugsweise aus einem Stahlwerkstoff geschmiedet und anschließend geschliffen, um auf diese Weise eine optimalen Verschleißfestigkeit auch bei lang andauerndem Betrieb sicher zu stellen. Die Platte 5 kann ggf. auch gefräst sein, wobei ein Schmiedeteil jedoch den Vorteil eines für die Betriebsfestigkeit günstigeren Faserverlaufs im Werkstoff aufweist. Die Oberflächen, die später die ersten, zweiten und dritten Auflagebereiche 6, 8, 10 bilden, sind vorzugsweise geschliffen, wodurch einerseits eine ideal glatte Oberflächenstruktur entsteht und andererseits je nach Anpressdruck der Schleifscheiben eine gewünschte Verdichtung und damit Zähigkeit der Oberflächenbereiche im Werkstoff erzielt werden werden kann.

Figur 5 zeigt eine perspektivische Darstellung des Abstützelements 40 zwischen Platte 5 und Stellglied 20, das vorzugsweise ebenfalls aus einem Stahlwerkstoff gefräst bzw. kalt-oder warmgeformt ist und geschliffene Oberflächen aufweist. Auf dem ein Viertelkreissegment bildenden Grundplatte 42 ist randseitig ein rechtwinkelig dazu stehender Randabschnitt 44 vorgesehen, auf dessen Oberfläche die um ca. 200 µm erhabene Kante zur Bildung des ersten Auflagebereichs 6 vorgesehen ist.

Figur 6a. zeigt eine perspektivische Darstellung des Zwischengliedes 50 zwischen Aktor 2 und Übertragungselement 4, das vorzugsweise ebenfalls aus einem Stahlwerkstoff gefräst bzw. geschmiedet ist und geschliffene Oberflächen aufweist. Das Zwischenglied 50 weist in der Draufsicht (vgl. Figur 6b) die Kontur eines Viertelkreises auf und ist an seiner Oberseite 54 mit einem Zapfen 56 versehen, der die Kontur einer Viertelellipse (vgl. Figur 6b) mit flacher Oberfläche hat. An seiner Unterseite ist das Zwischenglied mit der den zweiten Auflagebereich 8 bildenden erhabenen Kante versehen, die vorzugsweise verrundet ist und eine Höhe von ca. 200 µm aufweist. Der erhabene Zapfen 56 liegt seitlich am Aktor 2 an, dessen Unterseite 3 flächig auf der Oberseite 54 des Zwischengliedes 50 aufliegt.

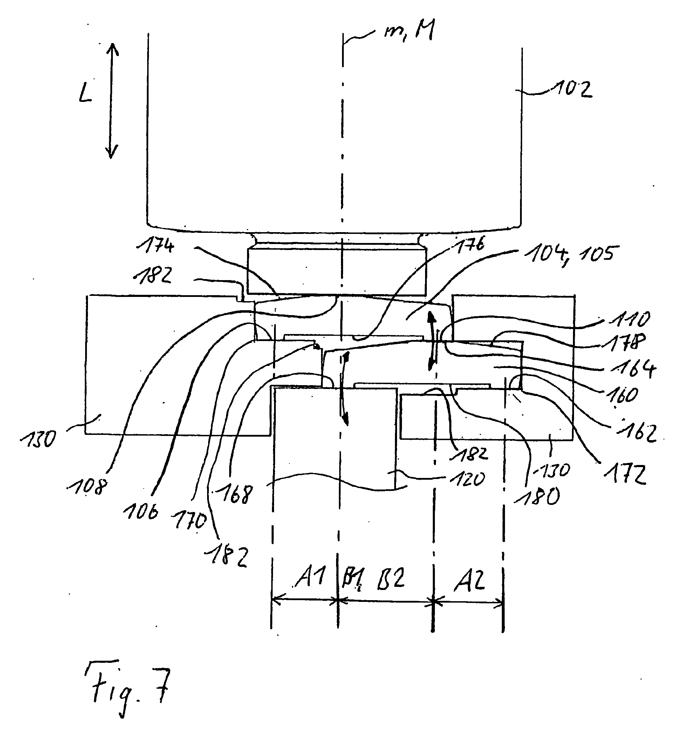

Figur 7 zeigt einer schematische Prinzipdarstellung einer Ausführungsform einer nicht erfindungsgemäßen Vorrichtung, bei der zwei in Reihe geschaltete Hebeleinrichtungen vorgesehen sind. Die dargestellte Vorrichtung weist ein erstes im Wesentlichen plattenförmiges Übertragungselement 104 auf, das senkrecht zur Auslenkungsrichtung L eines Aktors 102 angeordnet ist. Das erste Übertragungselement 104 beziehungsweise die Platte 105 weist einen ersten Auflagebereich 106 auf, der einem in einem Gehäuse 130 gebildeten ersten Gegenlager 170 zugeordnet ist. Weiterhin weist das erste Übertragungselement 104 einen zweiten Auflagebereich 108 auf, der dem Aktor 102 zugeordnet ist. Ein dritter Auflagebereich 110 des ersten übertragungselements 104 ist einem zweiten Übertragungselement 160 zugeordnet, das später erläutert wird. Das erste Obertragungselement 104 weist eine (leicht) konvexe Oberfläche 174 auf, deren Form beispielsweise durch Schleifen festgelegt werden kann. Der zweite Auflagebereich 108 ist dabei durch den höchsten Bereich gebildet. Die Unterseite des ersten Übertragungselements 104 weist eine Ausnehmung 176 auf, die eine Relativbewegung zwischen dem ersten Übertragungselement 104 und dem Gehäuse 130 ermöglicht. Diese Relativbewegung wird hervorgerufen, wenn der Aktor 102 auf den zweiten Auflagebereich 108 des ersten Übertragungselements 104 einwirkt. Ein zweites Übertragungselement 160, das baugleich mit dem ersten Obertragungselement 104 ausgeführt sein kann, weist einen vierte Auflagebereich 162 auf, der einem zweiten Gegenlager 172 zugeordnet ist, das in dem Gehäuse 130 vorgesehen ist. Das zweite Übertragungselement weist weiterhin einen fünften Auflagebereich 164 auf, der im höchsten Bereich der konvexen Oberfläche 178 vorgesehen ist. Ein sechster Auflagebereich 168 ist einem zu betätigenden Stellglied 120 zugeordnet. Um den für eine Relativbewegung zwischen dem zweiten Übertragungselement 160 und dem Gehäuse 130 erforderlichen Spielraum sicherzustellen, ist an der Unterseite des zweiten Übertragungselements 160 eine Ausnehmung 180 vorgesehen. Im Gehäuse 130 sind ebenfalls Ausnehmungen beziehungsweise Abstufungen 182 vorgesehen, um die jeweiligen Relativbewegungen zu ermöglichen. Das erste Übertragungselement 104 weist einen ersten (kurzen) Hebelarm A1 und eine zweiten (langen) Hebelarm B1 auf. In ähnlicher Weise weist das zweite Übertragungselement 160 einen ersten (kurzen) Hebelarm A2 und einen zweiten (langen) Hebelarm B2 auf. Eine nach unten gerichtete Auslenkung des Aktors 102 wird durch den dargestellten Aufbau auf das Stellglied 120 übertragen, indem zunächst der dritte Auflagebereich 110 des ersten Übertragungselements 104 entsprechend dem Verhältnis von A1 und B1 ausgelenkt wird. Der dritte Auflagebereich 110 des ersten Übertragungselements 104 wirkt dabei auf den fünften Auflagebereich 164 des zweiten Übertragungselements 160 ein, und lenkt das zweite übertragungselement 160 aus. Der sechste Auflagebereich 168 des zweiten Übertragungselements 160 wirkt dabei auf das Stellglied 120 ein und lenkt dieses in Abhängigkeit von der Größe der Auslenkung des Aktors 102 und den Längen der Hebelarme A1, B1, A2 und B2 aus. Die dargestellte zweistufige Hebeleinrichtung ermöglicht eine große Hebelwirkung ohne viel Bauraum in Anspruch zu nehmen. Selbstverständlich können gegebenenfalls auch mehr als zwei Hebelstufen vorgesehen werden, wenn dies erforderlich ist. Bei der dargestellten Ausführungsform fallen die Aktor-Mittelachse m und die Stellglied-Mittelachse M zusammen, was in vielen Fällen erwünscht ist. Die Mittelachsen m und M verlaufen dabei durch den zweiten Auflagebereich 108 und den sechsten Auflagebereich 168. Ein bevorzugtes Übersetzungsverhältnis zwischen einer Auslenkung des Aktors 102 und einer Auslenkung des Stellglieds 120 beträgt ungefähr 1:5. Ein Beispiel für die Abmessungen der jeweiligen Hebelarme ist A1 = A2 = 2,4 mm und B1 = B2 = 3,6 mm.

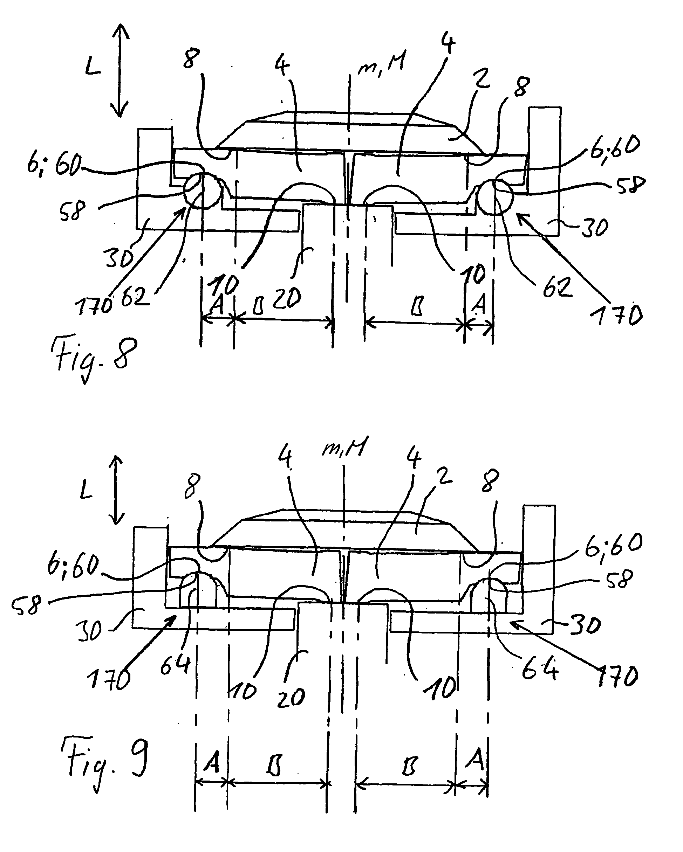

Figur 8 zeigt eine schematische Prinzipdarstellung einer Ausführungsform der erfindungsgemäßen Vorrichtung, bei der Relativbewegungen zwischen den Übertragungselementen und dem Gehäuse durch Abrollen erfolgen. Bei dieser Ausführungsform der erfindungsgemäßen Vorrichtung wirkt ein Aktor 2, der nur teilweise dargestellt ist, auf zwei Übertragungselemente 4 ein, die gegenüberliegend angeordnet sind. Die Übertragungselemente 4 weisen erste und zweite Hebelarme A und B auf, deren Längen das Übersetzungsverhältnis zwischen der Auslenkung des Aktors 2 und der Auslenkung des Stellglieds 20 festlegen. Beide Übertragungselemente 4 weisen einen ersten Auflagebereich 6 auf, der einem jeweiligen Gegenlager 170 zugeordnet ist. Weiterhin weisen beide Übertragungselemente 4 einen zweiten Auflagebereich 8 auf, der jeweils dem Aktor 2 zugeordnet ist. Dritte Auflagebereiche 10 der beiden Übertragungselemente 4 sind dem Stellglied 20 zugeordnet. Bei der in Figur 8 dargestellten Ausführungsform umfassen die Gegenlager 170 zwei Walzen 62, die drehbar aber ortsfest in dem Gehäuse 30 gelagert sind. Die Walzen 62 bilden abgerundete Abschnitte 58, die mit Ausnehmungen in den Übertragungselementen 4 bildenden abgerundeten Abschnitten 60 derart zusammenwirken, dass die Relativbewegungen zwischen dem Gehäuse 30 und den Übertragungselementen 4 eine Abrollbewegung ist. Dabei ist die Geometrie der Ausnehmungen in den Übertragungselementen 4 vorzugsweise an die Geometrie der Walzen 62 angepasst. Die Relativbewegungen zwischen dem Aktor 2 und den Übertragungselementen 4 erfolgt durch Gleiten im Bereich des zweiten Auflagebereichs 8. Die in Figur 8 dargestellte Ausführungsform minimiert somit die Verluste, die durch die Relativbewegungen zwischen den Übertragungselementen 4 und dem Gehäuse 30 auftreten.

Figur 9 zeigt eine schematische Prinzipdarstellung einer Ausführungsform der erfindungsgemäßen Vorrichtung, bei der Relativbewegungen zwischen zwei Übertragungselementen und dem Gehäuse durch eine Kombination von Abrollen und Translation erfolgen. Der Aufbau der in Figur 9 dargestellten Ausführungform der erfindungsgemäßen Vorrichtung entspricht bis auf die nachfolgend erläuterten Unterschiede dem Aufbau gemäß Figur 8. Bei der in Figur 9 dargestellten Ausführungsform umfassen die Gegenlager 170 jedoch separate Elemente 64, die verschiebbar in dem Gehäuse 30 gelagert sind. Die separaten Elemente 64 weisen an ihrer Oberseite einen abgerundeten Abschnitt 58 auf, der im dargestellten Fall mit halbkreisförmigem Querschnitt vorgesehen ist. Diese abgerundeten Abschnitte 58 wirken mit abgerundeten Abschnitten 60 zusammen, die durch (kleine) Ausnehmungen in den Übertragungselementen 4 gebildet sind. Auch in diesem Fall ist die Geometrie der abgerundeten Abschnitte 58 und der abgerundeten Abschnitte 60 vorzugsweise aneinander angepasst. Durch die abgerundeten Abschnitte 58, 60 wird ein Abrollen der Übertragungselemente 4 ermöglicht, während ein Gleiten der separaten Elemente 64 in dem Gehäuse 30 eine Translationsbewegung ermöglicht. Relativbewegungen zwischen dem Aktor 2 und den Übertragungselementen 4 erfolgen auch bei dieser Ausführungsform durch Gleiten, wobei die Relativbewegungen zwischen dem Aktor 2 und den Übertragungselementen 4 bei der in Figur 9 dargestellten Ausführungsform kleiner ausfallen können, als bei der Ausführungsform gemäß Figur 8.

Sowohl bei der Ausführungsform gemäß Figur 8 als auch bei der Ausführungsform gemäß Figur 9 sind die Oberflächen der separaten Elemente 62, 64, der mit diesen in Kontakt gelangenden Abschnitte des Gehäuses 30 und der Übertragungselemente 4 vorzugsweise derart beschaffen, dass niedrige Reibungswerte erzielt werden. Gleiches gilt für die sich berührenden Flächen im Bereich der zweiten Auflagebereiche 8.

Obwohl dies nicht dargestellt ist, können ähnliche Ergebnisse auch erzielt werden, wenn die abgerundeten Bereiche nicht durch separate Elemente 62, 64 sondern einstückig mit den Übertragungselementen 4 oder dem Gehäuse 30 gebildet sind, beispielsweise in Form von geeigneten Vorsprüngen.

Das erfindungsgemäße Übertragungselement lässt sich in vorteilhafter Weise zur Ansteuerung eines Servoventils eines Kraftstoffinjektors einsetzen, da hierbei die relativ geringen linearen Auslenkungen eines Piezoaktors auf effektive Weise in größere Hübe zur Steuerung eines Ventils umsetzen lassen. Das erfindungsgemäße Übertragungselement eignet sich dabei sowohl für einen sogenannten Common-Rail-Injektor eines Hochdruckspeicher-Einspritzsystems als auch für einen sogenannten Pumpe-Düse-Injektor, bei dem der Einspritzdruck bei jedem Arbeitstakt mit Hilfe einer jedem Injektor zugeordneten Hochdruckpumpe erzeugt wird.

Für den Fachmann ist erkennbar, dass sich die Erfindung in ihrer Ausführung nicht auf die vorstehend angegebenen bevorzugten Ausführungsbeispiele beschränkt. Vielmehr sind weitere Varianten denkbar, welche von der dargestellten Lösung auch bei grundsätzlich anders gearteten Ausführungen Gebrauch machen und daher von der Erfindung ebenfalls umfasst sind.

## Patentansprüche

1. Vorrichtung zum Übertragen einer Auslenkung eines Aktors (2; 102), mit wenigstens einem Übertragungselement (4; 104), das einen ersten, einen zweiten und einen dritten Auflagebereich aufweist (6, 8, 10; 106, 104, 106), wobei der erste Auflagebereich (6; 106) einem Gegenlager, der zweite Auflagebereich (8; 108) dem Aktor (2; 102) und der dritte Auflagebereich (10; 110) einem Stellglied (20; 120) zugeordnet ist, wobei sich das wenigstens eine Übertragungselement (4; 104) beim Einwirken des Aktors (2; 102) mit dem ersten Auflagebereich (6; 106) gegen das Gegenlager abstützt und durch eine Drehbewegung um einen Drehpunkt mit dem dritten Auflagebereich (10; 110) das Stellglied (20; 120) bewegt, wobei das wenigstens eine Übertragungselement (4; 104) im wesentlichen in Form einer Platte (5; 105) ausgebildet ist, die im wesentlichen senkrecht zur Stellbewegung (L) angeordnet ist, und wobei der erste, der zweite und der dritte Auflagebereich (6, 8, 10; 106, 108, 10) jeweils als im wesentlichen gerade Flächen auf der Platte (5; 105) ausgebildet sind, wobei wenigstens zwei Übertragungselemente (4; 104) gegenüber liegend angeordnet sind, wobei zwischen dem Aktor (2; 102) und dem zweiten Auflagebereich (14; 108) des wenigstens einen Obertragungselements (4; 104) ein mit dem Aktor (2; 102) verbundenes Zwischenglied (50) vorgesehen ist, wobei das Zwischenglied (50) wenigstens eine erhabene Kante aufweist, die mit dem zweiten Auflagebereich (14) der wenigstens einen Platte (5) in Berührung steht, wobei die erhabene Kante abgerundet ist.

2. Vorrichtung nach Anspruch 1,
**gekennzeichnet durch**
wenigstens drei Übertragungselemente (4; 104), die im wesentlichen konzentrisch zueinander angeordnet sind.

3. Vorrichtung nach einem der Ansprüche 1 oder 2,
**gekennzeichnet durch**
konzentrische Mittelachsen (M) des Aktors (2; 102) und des Stellglieds (20; 120).

4. Vorrichtung nach einem der Ansprüche 1 bis 3,
**dadurch gekennzeichnet,**
**dass** die Platte (5; 105) des wenigstens einen Übertragungselements (4) stufenförmig ausgebildet ist.

5. Vorrichtung nach Anspruch 4,
**dadurch gekennzeichnet,**
**dass** der zweite Auflagebereich (8) einer Oberseite und der dritte Auflagebereich (10) einer Unterseite eines ersten geraden Abschnitts (12) der stufenförmigen Platte (5) zugeordnet sind.

6. Vorrichtung nach einem der Ansprüche 4 oder 5,
**dadurch gekennzeichnet,**
**dass** der erste Auflagebereich (6) einer Unterseite eines zweiten geraden Abschnitts (14) der stufenförmigen Platte (5) zugeordnet ist.

7. Vorrichtung nach einem der Ansprüche 4 bis 6,
**dadurch gekennzeichnet,**
**dass** der erste und der zweite gerade Abschnitt (12, 14) der stufenförmigen Platte (5) durch einen Verbindungsabschnitt verbunden sind.

8. Vorrichtung nach einem der Ansprüche 4 bis 7,
**dadurch gekennzeichnet,**
**dass** der zweite gerade Abschnitt (14) der stufenförmigen Platte (5) einen unteren Mantelbereich des Aktors (2) teilweise umgreift.

9. Vorrichtung nach einem der Ansprüche 4 bis 8,
**dadurch gekennzeichnet,**
**dass** die Oberseite des ersten geraden Abschnitts (12) und die Unterseite des zweiten geraden Abschnitts (14) ungefähr auf einer gemeinsamen Ebene liegen.

10. Vorrichtung nach einem der vorstehenden Ansprüche,
**dadurch gekennzeichnet,**
**dass** die Platte (5; 105) durch Kalt- oder Warmverformung hergestellt ist.

11. Vorrichtung nach einem der vorstehenden Ansprüche,
**gekennzeichnet durch**
geschliffene Oberflächen der Auflagebereiche der Platte (5; 105).

12. Vorrichtung nach einem der Ansprüche 1 bis 11,
**gekennzeichnet durch**
eine form-, kraft- oder stoffschlüssige Verbindung zwischen Aktor (2; 102) und Zwischenglied (50).

13. Vorrichtung nach einem der Ansprüche 1 bis 12, **gekennzeichnet durch**
eine Linienberührung zwischen der erhabenen Kante des Zwischenglieds (50) und dem zweiten Auflagebereich (14) der Platte (5).

14. Vorrichtung nach einem der Ansprüche 1 bis 13,
**gekennzeichnet durch**
eine Höhe der erhabenen Kante von ungefähr 200 µm.

15. Vorrichtung nach einem der vorstehenden Ansprüche, **dadurch gekennzeichnet, dass** als Gegenlager zwischen einem Gehäuse (30; 130) und dem ersten Auflagebereich (6; 106) des wenigstens einen Übertragungselements (4; 104) wenigstens ein Abstützelement (40) vorgesehen ist.

16. Vorrichtung nach Anspruch 15, **dadurch gekennzeichnet, dass** das Abstützelement (40) eine erhabene Kante aufweist, die mit dem ersten Auflagebereich (6; 106) des wenigstens einen Übertragungselements (4; 104) in Berührung steht.

17. Vorrichtung nach Anspruch 16, **gekennzeichnet durch** eine Linienberührung zwischen der erhabenen Kante des Abstützelements (40) und dem ersten Auflagebereich (6; 106) des Obertragungselements (4; 104).

18. Vorrichtung nach Anspruch 16 oder 17,
**gekennzeichnet durch**
eine Höhe der erhabenen Kante von ungefähr 200 µm.

19. Vorrichtung nach einem der Ansprüche 16 bis 18,
**gekennzeichnet durch**
eine abgerundete erhabene Kante.

20. Vorrichtung nach einem der Ansprüche 15 bis 19,
**gekennzeichnet durch**
geschliffene Oberflächen des Zwischenglieds (50) und/oder des Abstützelements (40).

21. Vorrichtung nach einem der vorstehenden Ansprüche,
**dadurch gekennzeichnet,**
**dass** der Aktor (2; 102) ein piezoelektrischer Aktor ist.

22. Vorrichtung nach einem der vorstehenden Ansprüche,
**gekennzeichnet durch**
ein Übersetzungsverhältnis in einem Bereich von ungefähr 1: 4 bis 1 : 20 zwischen einer Auslenkung des Aktors (2; 102) und einer Auslenkung des Stellglieds (20; 120).

23. Vorrichtung nach einem der vorstehenden Ansprüche,
**gekennzeichnet durch**
ein Übersetzungsverhältnis von ungefähr 1 : 6 zwischen einer Auslenkung des Aktors (2; 102) und einer Auslenkung des Stellglieds (20; 120).

24. Vorrichtung nach einem der vorstehenden Ansprüche,
**gekennzeichnet durch**
eine dreieckige Kontur der längsgeschnittenen Platte (5).

25. Vorrichtung nach einem der vorhergehenden Ansprüche, zum Übertragen einer Auslenkung eines Aktors (102), insbesondere eines Piezo-Aktors (102) eines Einspritzventils,
**dadurch gekennzeichnet,**
**dass** zumindest eine erste Hebeleinrichtung (104, 170) und eine zweite Hebeleinrichtung (160, 172) vorgesehen ist, wobei die Auslenkung des Aktors (102) von der ersten Hebeleinrichtragen wird.

26. Vorrichtung nach Anspruch 25,
**dadurch gekennzeichnet,**
**dass** die Auslenkung des Aktors (102) von der zweiten Hebeleinrichtung (160, 172) zu einem Stellglied (120) übertragen wird.

27. Vorrichtung nach Anspruch 25 oder 26,
**dadurch gekennzeichnet,**
**dass** die erste Hebeleinrichtung (104, 170) und/oder die zweite Hebeleinrichtung (160, 172) zumindest ein im Wesentlichen senkrecht zur Auslenkungsrichtung (L) des Aktors angeordnetes Übertragungselement (104, 160) aufweist.

28. Vorrichtung nach Anspruch 27,
**dadurch gekennzeichnet,**
**dass** zumindest ein Übertragungselement (104, 160) im Wesentlichen plattenförmig ist.

29. Vorrichtung nach einem der Ansprüche 27 oder 28,
**dadurch gekennzeichnet,**
**dass** sie ein erstes Übertragungselement (104) mit einem ersten, zweiten und dritten Auflagebereich (106, 108, 110) und ein zweites Übertragungselement (160) mit einem vierten, fünften und sechsten Auflagebereich (162, 164, 166) aufweist, wobei der erste Auflagebereich (106) einem ersten Gegenlager (170), der zweite Auflagebereich (108) dem Aktor (102), der dritte Auflagebereich (110) dem zweiten Übertragungselement (160), der vierte Auflagebereich (162) einem zweiten Gegenlager (172), der fünfte Auflagebereich (164) dem ersten Übereinem Stellglied (120) zugeordnet ist.

30. Vorrichtung nach Anspruch 29,
**dadurch gekennzeichnet,**
**dass** sich das erste übertragungselement (104) beim Einwirken des Aktors (102) auf den zweiten Auflagebereich (108) mit dem ersten Auflagebereich (106) gegen das erste Gegenlager (170) abstützt und durch eine Drehbewegung mit dem dritten Auflagebereich (110) auf den fünften Auflagebereich des zweiten Übertragungselements (160) einwirkt, das sich mit dem vierten Auflagebereich (162) an dem zweiten Gegenlager (172) abstützt und durch eine Drehbewegung mit dem sechsten Auflagebereich (166) auf das Stelleglied (120) einwirkt.

31. Vorrichtung nach Anspruch 29 oder 30,
**dadurch gekennzeichnet,**
**dass** eine Aktor-Mittelachse (m) und eine Stellglied-Mittelachse (M) durch den zweiten Auflagebereich (108) und den sechsten Auflagebereich (168) verlaufen.

32. Vorrichtung nach einem der vorstehenden Ansprüche,
**dadurch gekennzeichnet,**
**dass** zumindest ein Gegenlager (170, 172) und/oder zumindest ein Übertragungselement (4; 104, 160) im Bereich des ersten beziehungsweise vierten Auflagebereichs (6; 106, 162) zumindest einen abgerundeten Abschnitt (58, 60) aufweist, der hinsichtlich einer Relativbewegung zwischen einem Gehäuse (30; 130) und dem Übertragungselement (4; 104, 160) ein Abrollen ermöglicht.

33. Vorrichtung nach Anspruch 31,
**dadurch gekennzeichnet,**
**dass** zumindest ein abgerundeter Abschnitt (58) durch zumindest ein separates Element (62; 64) gebildet ist.

34. Vorrichtung nach Anspruch 32 oder 33,
**dadurch gekennzeichnet,**
**dass** zumindest ein separates Element (62) drehbar in dem Gehäuse (30) gelagert ist.

35. Vorrichtung nach einem der Anspruche 32 bis 34,
**dadurch gekennzeichnet,**
**dass** zumindest ein separates Element (64) verschiebbar in dem Gehäuse (30) gelagert ist.

36. Vorrichtung nach einem der Anspruche 32 bis 35,
**dadurch gekennzeichnet,**
**dass** zumindest ein separates Element durch eine Kugel oder eine Walze (62) gebildet ist.

37. Einspritzvorrichtung mit einer Vorrichtung nach einem der Ansprüche 1 bis -36.

38. Einspritzvorrichtung mit einer Vorrichtung nach einem der Ansprüche 1 bis -36,
**gekennzeichnet durch**
ein Pumpe-Düse-Wirkprinzip.

## Claims

1. A device for transmitting an excursion of an actuator (2; 102) having at least one transmission element (4; 104) which comprises a first, a second, and a third bearing area (6, 8, 10; 106, 104, 106), wherein the first bearing area (6, 106) is assigned to a counter bearing, the second bearing area (8; 108) is assigned to the actuator (2; 102) and the third bearing area (10; 110) is assigned to a control member (20; 120), wherein the at least one transmission element (4; 104) is supported with the first bearing area (6; 106) against the counter bearing when the actuator (2; 102) is operated and moves the control member (20; 120) with the third bearing area (10; 110) by means of a rotational motion about a point of rotation, wherein the at least one transmission element (4; 104) is configured substantially in the form of a plate (5; 105) which is disposed substantially perpendicular to the control motion (L), and wherein the first, second and third bearing areas (6, 8, 10; 106, 108, 110) are each configured as substantially flat surfaces on the plate (5; 105), wherein at least two transmission elements (4; 104) are disposed opposite to each other, wherein an intermediate member (50) connected to the actuator (2; 102) is provided between the actuator (2; 102) and the second bearing area (14; 108) of the at least one transmission element (4; 104), wherein the intermediate member (50) comprises at least one raised edge which is in contact with the second bearing area (14) of the at least one plate (5), the raised edge being rounded.

2. The device according to claim 1, **characterized by** at least three transmission elements (4; 104) which are disposed in a substantially concentric manner in respect of each other.

3. The device according to any one of claims 1 or 2, **characterized by** concentric central axes (M) of the actuator (2; 102) and the control member (20; 120).

4. The device according to any one of claims 1 to 3, **characterized in that** the plate (5; 105) of the at least one transmission element (4) is configured in a stepped manner.

5. The device according to claim 4, **characterized in that** the second bearing area (8) is assigned to an upper side and the third bearing area (10) is assigned to a lower side of a first straight section (12) of the stepped plate (5).

6. The device according to any one of claims 4 or 5, **characterized in that** the first bearing area (6) is assigned to a lower side of a second straight section (14) of the stepped plate (5).

7. The device according to any one of claims 4 to 6, **characterized in that** the first and the second straight sections (12, 14) of the stepped plate (5) are connected by means of a connecting section.

8. The device according to any one of claims 4 to 7, **characterized in that** the second straight section (14) of the stepped plate (5) partially encompasses a lower sleeve area of the actuator (2).

9. The device according to any one of claims 4 to 8, **characterized in that** the upper side of the first straight section (12) and the lower side of the second straight section (14) lie approximately on a common plane.

10. The device according to any one of the preceding claims, **characterized in that** the plate (5; 105) is produced by cold or hot forming.

11. The device according to any one of the preceding claims, **characterized by** ground surfaces of the bearing areas of the plate (5; 105).

12. The device according to any one of claims 1 to 11, **characterized by** a positive, non-positive or material-fit connection between the actuator (2; 102) and the intermediate member (50).

13. The device according to any one of claims 1 to 12, **characterized by** a linear contact between the raised edge of the intermediate member (50) and the second bearing area (14) of the plate (5).

14. The device according to any one of claims 1 to 13, **characterized by** a raised edge height of approximately 200 µm.

15. The device according to any one of the preceding claims, **characterized in that** at least one support element (40) is provided as a counter bearing between a housing (30; 130) and the first bearing area (6; 106) of the at least one transmission element (4; 104).

16. The device according to claim 15, **characterized in that** the support element (40) comprises a raised edge which is in contact with the first bearing area (6; 106) of the at least one transmission element (4; 104).

17. The device according to claim 16, **characterized by** a linear contact between the raised edge of the support element (40) and the first bearing area (6; 106) of the transmission element (4; 104).

18. The device according to claim 16 or 17, **characterized by** a raised edge height of approximately 200 µm.

19. The device according to any one of claims 16 to 18, **characterized by** a rounded raised edge.

20. The device according to any one of claims 15 to 19, **characterized by** ground surfaces of the intermediate member (50) and/or the support element (40).

21. The device according to any one of the preceding claims, **characterized in that** the actuator (2; 102) is a piezoelectric actuator.

22. The device according to any one of the preceding claims, **characterized by** a translation ratio in the range of approximately 1:4 to 1:20 of an excursion of the actuator (2; 102) to an excursion of the control member (2; 120).

23. The device according to any one of the preceding claims, **characterized by** a translation ratio of approximately 1:6 of an excursion of the actuator (2; 102) to an excursion of the control member (20; 120).

24. The device according to any one of the preceding claims, **characterized by** a triangular contour of the longitudinal section of the plate (5).

25. The device according to any one of the preceding claims, for transmitting an excursion of an actuator (102), in particular a piezoactuator (102) of an injection valve, **characterized in that** at least a first lever device (104, 170) and a second lever device (160, 172) are provided, wherein the excursion of the actuator (102) is transmitted from the first lever device (104, 170) to the second lever device (160, 172).

26. The device according to claim 25, **characterized in that** the excursion of the actuator (102) is transmitted from the second lever device (160, 172) to a control member (120).

27. The device according to claim 25 or 26, **characterized in that** the first lever device (104, 170) and/or the second lever device (160, 172) comprises at least one transmission element (104, 160) disposed substantially perpendicular to the direction of excursion (L) of the actuator.

28. The device according to claim 27, **characterized in that** at least one transmission element (104, 160) is substantially plate-shaped.

29. The device according to claim 27 or 28, **characterized in that** it comprises a first transmission element (104) with a first, second and third bearing area (106, 108, 110) and a second transmission element (160) with a fourth, fifth and sixth bearing area (162, 164, 166), wherein the first bearing area (106) is assigned to a first counter bearing (170), the second bearing area (108) is assigned to the actuator (102), the third bearing area (110) is assigned to the second transmission element (160), the fourth bearing area (162) is assigned to a second counter bearing (172), the fifth bearing area (164) is assigned to the first transmission element (104) and the sixth bearing area (166) is assigned to a control element (120).

30. The device according to claim 29, **characterized in that** the first transmission element (104) is supported with the first bearing area (106) against the first counter bearing (170) when the actuator (102) acts on the second bearing area (108) and acts with the third bearing area (110) on the fifth bearing area of the second transmission element (160) by means of a rotational motion, said transmission element (160) being supported with the fourth bearing area (162) against the second counter bearing (172) and acting with the sixth bearing area (166) on the control member (120) by means of a rotational motion.

31. The device according to claim 29 or 30, **characterized in that** a central axis of the actuator (m) and a central axis of the control member (M) run through the second bearing area (108) and the sixth bearing area (168).

32. The device according to any one of the preceding claims, **characterized in that** at least one counter bearing (170, 172) and/or at least one transmission element (4; 104, 160) comprises at least one rounded section (58, 60) in the area of the first and/or fourth bearing area (6; 106, 162), said rounded section (58, 60) allowing rolling in respect of a relative motion between a housing (30; 130) and the transmission element (4; 104, 160).

33. The device according to claim 32, **characterized in that** at least one rounded section (58) is formed by at least one separate element (62; 64).

34. The device according to claim 32 or 33, **characterized in that** at least one separate element (62) is supported in a rotatable manner in the housing (30).

35. The device according to any one of claims 32 to 34, **characterized in that** at least one separate element (64) is supported in a movable manner in the housing (30).

36. The device according to any one of claims 32 to 35, **characterized in that** at least one separate element is formed by a sphere or a drum (62).

37. An injection device comprising a device according to any one of claims 1 to 36.

38. The injection device comprising a device according to any one of claims 1 to 36, **characterized in that** the device operates by a pump-nozzle principle.

## Revendications

1. Dispositif pour transmettre une déviation d'un actionneur (2 ; 102), comprenant au moins un élément de transmission (4 ; 104) qui présente une première, une deuxième et une troisième région d'appui (6, 8, 10 ; 106, 108, 110), la première région d'appui (6 ; 106) étant associée à un palier de butée, la deuxième région d'appui (8 ; 108) étant associée à l'actionneur (2 ; 102) et la troisième région d'appui (10 ; 110) étant associée à un organe de réglage (20 ; 120), l'au moins un élément de transmission (4 ; 104), lors de l'activation de l'actionneur (2 ; 102) s'appuyant avec la première région d'appui (6 ; 106) contre le palier de butée, et, par un mouvement de rotation autour d'un centre de rotation, déplaçant avec la troisième région d'appui (10 ; 110) l'organe de réglage (20 ; 120), l'au moins un élément de transmission (4 ; 104) étant réalisé sensiblement en forme de plaque (5 ; 105), qui est disposée sensiblement perpendiculairement au mouvement de réglage (L), et la première, la deuxième et la troisième région d'appui (6, 8, 10 ; 106, 108, 110) étant réalisées à chaque fois sous forme de surfaces sensiblement droites sur la plaque (5 ; 105), au moins deux éléments de transmission (4 ; 104) étant disposés en regard l'un de l'autre, entre l'actionneur (2 ; 102) et la deuxième région d'appui (8 ; 108) de l'au moins un élément de transmission (4 ; 104) étant prévu un organe intermédiaire (50) connecté à l'actionneur (2 ; 102), l'organe intermédiaire (50) présentant au moins une arête rehaussée qui est en contact avec la deuxième région d'appui (8) de l'au moins une plaque (5), l'arête rehaussée étant arrondie.

2. Dispositif selon la revendication 1,
**caractérisé par**
au moins trois éléments de transmission (4 ; 104) qui sont disposés de manière sensiblement concentrique les uns par rapport aux autres.

3. Dispositif selon l'une quelconque des revendications 1 ou 2,
**caractérisé par**
des axes médians concentriques (M) de l'actionneur (2 ; 102) et de l'organe de réglage (20 ; 120).

4. Dispositif selon l'une quelconque des revendications 1 à 3,
**caractérisé en ce que**
la plaque (5 ; 105) de l'au moins un élément de transmission (4) est réalisée sous forme étagée.

5. Dispositif selon la revendication 4,
**caractérisé en ce que**
la deuxième région d'appui (8) est associée à un côté supérieur, et la troisième région d'appui (10) est associée à un côté inférieur, d'une première portion droite (12) de la plaque (5) de forme étagée.

6. Dispositif selon l'une quelconque des revendications 4 ou 5,
**caractérisé en ce que**
la première région d'appui (6) est associée à un côté inférieur d'une deuxième portion droite (14) de la plaque (5) de forme étagée.

7. Dispositif selon l'une quelconque des revendications 4 à 6,
**caractérisé en ce que**
la première et la deuxième portion droite (12, 14) de la plaque (5) de forme étagée sont reliées par une portion de liaison.

8. Dispositif selon l'une quelconque des revendications 4 à 7,
**caractérisé en ce que**
la deuxième portion droite (14) de la plaque (5) de forme étagée vient en prise en partie autour d'une région d'enveloppe inférieure de l'actionneur (2).

9. Dispositif selon l'une quelconque des revendications 4 à 8,
**caractérisé en ce que**
le côté supérieur de la première portion droite (12) et le côté inférieur de la deuxième portion droite (14) se situent approximativement dans un même plan.

10. Dispositif selon l'une quelconque des revendications précédentes,
**caractérisé en ce que**
la plaque (5 ; 105) est fabriquée par façonnage à froid ou à chaud.

11. Dispositif selon l'une quelconque des revendications précédentes,
**caractérisé par**
des surfaces meulées des régions d'appui de la plaque (5 ; 105).

12. Dispositif selon l'une quelconque des revendications 1 à 11,
**caractérisé par**
une connexion par engagement positif, par force ou par liaison de matière entre l'actionneur (2 ; 102) et l'organe intermédiaire (50).

13. Dispositif selon l'une quelconque des revendications 1 à 12,
**caractérisé par**
un contact linéaire entre l'arête rehaussée de l'organe intermédiaire (50) et la deuxième région d'appui (14) de la plaque (5).

14. Dispositif selon l'une quelconque des revendications 1 à 13,
**caractérisé par**
une hauteur de l'arête rehaussée d'environ 200 µm.

15. Dispositif selon l'une quelconque des revendications précédentes, **caractérisé en ce qu'**au moins un élément de support (40) est prévu en tant que palier de butée entre un boîtier (30 ; 130) et la première région d'appui (6 ; 106) de l'au moins un élément de transmission (4 ; 104).

16. Dispositif selon la revendication 15, **caractérisé en ce que** l'élément de support (40) présente une arête rehaussée qui est en contact avec la première région d'appui (6 ; 106) de l'au moins un élément de transmission (4 ; 104).

17. Dispositif selon la revendication 16, **caractérisé par** un contact linéaire entre l'arête rehaussée de l'élément de support (40) et la première région d'appui (6 ; 106) de l'élément de transmission (4 ; 104).

18. Dispositif selon la revendication 16 ou 17,
**caractérisé par**
une hauteur de l'arête rehaussée d'environ 200 µm.

19. Dispositif selon l'une quelconque des revendications 16 à 18,
**caractérisé par**
une arête rehaussée arrondie.

20. Dispositif selon l'une quelconque des revendications 15 à 19,
**caractérisé par**
des surfaces meulées de l'organe intermédiaire (50) et/ou de l'élément de support (40).

21. Dispositif selon l'une quelconque des revendications précédentes,
**caractérisé en ce que**
l'actionneur (2 ; 102) est un actionneur piézoélectrique.

22. Dispositif selon l'une quelconque des revendications précédentes,
**caractérisé par**
un rapport de transmission dans une région d'environ 1 : 4 à 1 : 20 entre une déviation de l'actionneur (2 ; 102) et une déviation de l'organe de réglage (20 ; 120).

23. Dispositif selon l'une quelconque des revendications précédentes,
**caractérisé par**
un rapport de transmission d'environ 1 : 6 entre une déviation de l'actionneur (2 ; 102) et une déviation de l'organe de réglage (20 ; 120).

24. Dispositif selon l'une quelconque des revendications précédentes,
**caractérisé par**
un contour triangulaire de la plaque (5) découpée en longueur.

25. Dispositif selon l'une quelconque des revendications précédentes, pour la transmission d'une déviation d'un actionneur (102), en particulier d'un actionneur piézoélectrique (102) d'une soupape d'injection,
**caractérisé en ce**
**qu'**au moins un premier dispositif de levier (104, 170) et un deuxième dispositif de levier (160, 172) sont prévus, la déviation de l'actionneur (102) par le premier dispositif de levier (104, 170) étant transmise au deuxième dispositif de levier (160, 172).

26. Dispositif selon la revendication 25,
**caractérisé en ce que**
la déviation de l'actionneur (102) par le deuxième dispositif de levier (160, 172) est transmise à un organe de réglage (120).

27. Dispositif selon la revendication 25 ou 26,
**caractérisé en ce que**
le premier dispositif de levier (104, 170) et/ou le deuxième dispositif de levier (160, 172) présentent au moins un élément de transmission (104, 160) disposé sensiblement perpendiculairement à la direction de déviation (L) de l'actionneur.

28. Dispositif selon la revendication 27,
**caractérisé en ce**
**qu'**au moins un élément de transmission (104, 160) est sensiblement en forme de plaque.

29. Dispositif selon l'une quelconque des revendications 27 ou 28,
**caractérisé en ce**
**qu'**il présente un premier élément de transmission (104) avec une première, deuxième et troisième région d'appui (106, 108, 110) et un deuxième élément de transmission (160) avec une quatrième, cinquième et sixième région d'appui (162, 164, 166), la première région d'appui (106) étant associée à un premier palier de butée (170), la deuxième région d'appui (108) étant associée à l'actionneur (102), la troisième région d'appui (110) étant associée au deuxième élément de transmission (160), la quatrième région d'appui (162) étant associée à un deuxième palier de butée (172), la cinquième région d'appui (164) étant associée au premier élément de transmission (104) et la sixième région d'appui (166) étant associée à un organe de réglage (120).

30. Dispositif selon la revendication 29,
**caractérisé en ce que**
le premier élément de transmission (104), lors de l'activation de l'actionneur (102) sur la deuxième région d'appui (108), s'appuie avec la première région d'appui (106) contre le premier palier de butée (170), et, par un mouvement de rotation, agit avec la troisième région d'appui (110) sur la cinquième région d'appui du deuxième élément de transmission (160), qui s'appuie avec la quatrième région d'appui (162) sur le deuxième palier de butée (172) et, par un mouvement de rotation, agit avec la sixième région d'appui (166) sur l'organe de réglage (120).

31. Dispositif selon la revendication 29 ou 30,
**caractérisé en ce**
**qu'**un axe médian d'actionneur (m) et un axe médian d'organe de réglage (M) s'étendent à travers la deuxième région d'appui (108) et la sixième région d'appui (168).

32. Dispositif selon l'une quelconque des revendications précédentes,
**caractérisé en ce**
**qu'**au moins un palier de butée (170, 172) et/ou au moins un élément de transmission (4 ; 104, 160) présentent, dans la région de la première, respectivement de la quatrième région d'appui (6 ; 106, 162), au moins une portion arrondie (58, 60), qui permet un roulement en vue d'un mouvement relatif entre un boîtier (30 ; 130) et l'élément de transmission (4 ; 104, 160).

33. Dispositif selon la revendication 32,
**caractérisé en ce**
**qu'**au moins une portion arrondie (58) est formée par au moins un élément séparé (62 ; 64).

34. Dispositif selon la revendication 32 ou 33,
**caractérisé en ce**
**qu'**au moins un élément séparé (62) est monté à rotation dans le boîtier (30).

35. Dispositif selon l'une quelconque des revendications 32 à 34,
**caractérisé en ce**
**qu'**au moins un élément séparé (64) est monté de manière déplaçable par coulissement dans le boîtier (30).

36. Dispositif selon l'une quelconque des revendications 32 à 35,
**caractérisé en ce**
**qu'**au moins un élément séparé est formé par une bille ou un rouleau (62).

37. Dispositif d'injection comprenant un dispositif selon l'une quelconque des revendications 1 à 36.

38. Dispositif d'injection comprenant un dispositif selon l'une quelconque des revendications 1 à 36, **caractérisé par** un principe d'action pompe-buse.
